Europäisches Patentamt

European Patent Office

Office européen des brevets

(19)

(11) **EP 1 119 699 B1**

(12) **EUROPÄISCHE PATENTSCHRIFT**

(45) Veröffentlichungstag und Bekanntmachung des Hinweises auf die Patenterteilung:
**15.09.2004 Patentblatt 2004/38**

(21) Anmeldenummer: **00942119.9**

(22) Anmeldetag: **23.06.2000**

(51) Int Cl.[7]: **F02M 25/07**

(86) Internationale Anmeldenummer:
**PCT/EP2000/005802**

(87) Internationale Veröffentlichungsnummer:
**WO 2001/011217 (15.02.2001 Gazette 2001/07)**

(54) **VERFAHREN ZUR EINSTELLUNG EINER AUFGELADENEN BRENNKRAFTMASCHINE MIT ABGASRÜCKFÜHRUNG**

METHOD FOR ADJUSTING A BOOSTED INTERNAL COMBUSTION ENGINE WITH EXHAUST GAS RECIRCULATION

PROCEDE DE REGLAGE D'UN MOTEUR A COMBUSTION SURALIMENTE AVEC RECYCLAGE DES GAZ D'ECHAPPEMENT

(84) Benannte Vertragsstaaten:
**DE FR IT NL**

(30) Priorität: **05.08.1999 DE 19936884**

(43) Veröffentlichungstag der Anmeldung:
**01.08.2001 Patentblatt 2001/31**

(73) Patentinhaber: **DaimlerChrysler AG**
**70567 Stuttgart (DE)**

(72) Erfinder: **SCHMID, Wolfram**
**D-72622 Nürtingen (DE)**

(56) Entgegenhaltungen:
**DE-A- 19 838 725          DE-C- 19 730 403**
**DE-U- 9 421 145           US-A- 5 121 734**
**US-A- 5 517 976**

- **MATTES P ET AL: "UNTERSUCHUNGEN ZUR ABGASRUECKFUEHRUNG AM HOCHLEISTUNGSDIESELMOTOR" MTZ MOTORTECHNISCHE ZEITSCHRIFT,DE,FRANCKH'SCHE VERLAGSHANDLUNG,ABTEILUNG TECHNIK. STUTTGART, Bd. 60, Nr. 4, April 1999 (1999-04), Seiten 234-236,238-240,242-243, XP000822843 ISSN: 0024-8525**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Einstellung einer aufgeladenen Brennkraftmaschine mit Abgasrückführung nach dem Oberbegriff des Anspruches 1.

Zur Reduzierung von Abgasemissionen ist es bekannt, Brennkraftmaschinen mit einer Abgasrückführung zu versehen, über die ein Teil des erzeugten Abgases aus dem Abgasstrang in den Ansaugtrakt des Verbrennungsmotors zurückgeleitet wird. Diese Methode hat sich auch bei aufgeladenen Brennkraftmaschinen bewährt, deren Abgasturbine von den unter erhöhtem Abgasgegendruck stehenden Abgasen angetrieben wird und einen Verdichter betätigt, der angesaugte Frischluft auf einen erhöhten Ladedruck verdichtet. Bei derartigen aufgeladenen Brennkraftmaschinen besteht das Problem, daß im Falle einer Abzweigung der Rückführungsleitung stromauf der Abgasturbine eine Abgasrückführung nur in Betriebspunkten möglich ist, in welchen der Abgasgegendruck den Ladedruck übersteigt, wobei in diesem Fall aber kein positives Spülgefälle mit einem höheren Druck am Zylindereingang im Vergleich zum Zylinderausgang aufgebaut werden kann.

Um dieses Problem zu beheben, wird gemäß der Druckschrift DE 195 21 573 A1 vorgeschlagen, zwischen Abgasstrang und Ansaugtrakt ein Rückschlagventil anzuordnen, das durch den Abgasgegendruck gegen eine rückstellende Kraft geöffnet wird. Dadurch ist sichergestellt, daß nur in Betriebspunkten mit einem den Ladedruck übersteigenden Abgasgegendruck die Verbindung zwischen Abgasstrang und Ansaugtrakt geöffnet wird und aufgrund des positiven Druckgefälles Abgas in Richtung Ansaugtrakt strömen kann.

Diese Ausführung hat den Nachteil, dass die Abgasrückführung auf die Betriebspunkte mit einem den Ladedruck übersteigenden Abgasgegendruck beschränkt ist. Eine kontinuierliche Abgasrückführung ist nicht möglich, so dass die den Brennräumen zugeführte Verbrennungsluft einen permanent wechselnden Sauerstoffgehalt enthält, wodurch eine saubere, schadstoffarme Verbrennung erschwert wird.

Aus der Druckschrift MTZ "Motortechnische Zeitschrift" 60 (1999), Heft 4 (April), Seiten 234 - 243 ist ein Verfahren zur lastabhängigen Einstellung einer aufgeladenen Brennkraftmaschine mit Abgasrückführung bekannt, die auf dem Prinzip von Abgas-Spenderzylindern beruht. Hierbei wird lediglich das Abgas von einem Zylinder der Brennkraftmaschine in den Ansaugtrakt rückgeführt, wohingegen das Abgas der übrigen Zylinder in der herkömmlichen Weise über den Abgasstrang abgeleitet wird. Bei diesem Konzept wird somit nicht das Abgas des ganzen Motors, sondern nur das Abgas eines einzelnen Zylinders für die Abgasrückführung herangezogen, woraus sich Verbrauchsvorteile ergeben.

Die Abgasrückführrate bleibt bei diesem Abgasspenderzylinderkonzept über alle Betriebszustände der Brennkraftmaschine konstant. Die Rückführrate entspricht hierbei genau dem zahlenmäßigen Anteil der Spenderzylinder im Verhältnis zur gesamten Zylinderzahl. Bei einem Achtzylindermotor mit einem Spenderzylinder sind dies 12,5 %, bei einem Zwölfzylindermotor mit einem Spenderzylinder 8,3 %. Eine betriebspunktabhängige Optimierung des Abgasverhaltens der Brennkraftmaschine ist aber mit diesem Verfahren nicht zu realisieren.

Aus der Druckschrift US 5 121 734 ist eine Brennkraftmaschine mit sechs Zylindern bekannt, von denen ein Zylinder die Funktion eines Spender-Abgaszylinders übernimmt, dessen Abgas über eine Abgasrückführungseinrichtung dem Ansaugtrakt der Brennkraftmaschine wieder zugeführt wird. Bei kleinen Lasten und im Leerlauf wird die Abgasrückführrate etwa auf 15 % der Abgasmenge festgelegt. Zur Reduktion der Abgasrückführungsrate bei hohen Lasten wird die von einer Kraftstoffeinspritzpumpe zugemessene Kraftstoffeinspritzmenge des Abgasspenderzylinders reduziert, derart, dass die Abgasrückführrate unter Volllast auf etwa 10 % absinkt. Es ist somit aus der US 5 121 734 bekannt, durch Veränderung der Kraftstoffeinspritzmenge in den Abgasspenderzylinder die Abgasrückführrate von einem Maximum im Leerlauf auf ein Minimum bei hohen Lasten zu reduzieren.

Aus der Druckschrift DE 198 38 725 A1 ist es bekannt, in bestimmten Betriebspunkten der Brennkraftmaschine die einem Abgasspenderzylinder zuzuführende Kraftstoffmenge zu reduzieren oder auch die Einspritzung vollständig abzuschalten.

Der Erfindung liegt das Problem zugrunde, die Abgasrückführung für eine Brennkraftmaschine für jeden Betriebspunkt angepaßt darzustellen, zweckmäßigerweise in Abhängigkeit der Last.

Dieses Problem wird erfindungsgemäß mit den Merkmalen des Anspruches 1 gelöst.

Gemäß dem neuartigen Verfahren ist vorgesehen, dass das Abgas nur eines Teils der Zylinder der Brennkraftmaschine, insbesondere nur eines einzelnen Zylinders, in den Ansaugtrakt rückgeführt wird, wobei die an der Abgasrückführung beteiligten Zylinder als Abgas-Spenderzylinder bezeichnet werden. Durch die vollständige Entnahme des Abgases aus dem Spenderzylinder bzw. den Spenderzylindern können die übrigen, an der Abgasrückführung unbeteiligten Zylinder mittels einer entsprechenden Auslegung des Turboladers mit einem positiven Spülgefälle betrieben werden, bei dem der Ladedruck den Abgasgegendruck übersteigt. Mit dieser Maßnahme wird erreicht, dass die volumetrische Rückführungsrate - diejenige Rate, die das Verhältnis des rückgeführten Abgasvolumenstroms zum gesamten Abgasvolumenstrom bezeichnet - unter Normalbedingungen mit gleicher Kraftstoffeinspritzung in alle Zylinder über das gesamte Kennfeld der Brennkraftmaschine konstant bleibt, weil die volumetrische Rührungsrate entsprechend dem Verhältnis der Anzahl der Spenderzylinder zur Gesamtanzahl an Zylindern berechnet wird und dieses Verhältnis nicht verändert wird, weil ausschließlich das Abgas der Spenderzylinder in die Rückführung eingespeist wird.

Um die Abgas-Rückführungsrate betriebspunktabhängig einstellen zu können, ist vorgesehen, die Kraftstoffeinspritzung in die Brennräume der Spenderzylinder zu manipulieren, wobei eine Verdoppelung der Einspritzmenge die doppelte Menge an Abgas im Spenderzylinder produziert und entsprechend eine Halbierung der Einspritzmenge ebenfalls das Abgas auf die Hälfte reduziert. Die Kraftstoffeinspritzung in die Brennräume der Spenderzylinder erfolgt unabhängig von der Einspritzung in die übrigen Zylinder und wird insbesondere als Funktion der Last eingestellt, so daß eine variabel einstellbare Abgas-Rückführungsrate auch bei einem Einsatz eines Abgas-Spenderzylinders darstellbar ist. Auf diese Weise kann die Abgas-Rückführungsrate im Hinblick auf eine minimierte Abgasemission sowie zusätzliche Randbedingungen wie gute Laufruhe und hohe Leistungsabgabe im Vollastbereich optimal eingestellt werden.

Dabei erfolgt die Kraftstoffeinspritzung in die Brennräume der Abgas-Spenderzylinder lastabhängig in der Weise, daß die Abgas-Rückführungsrate einer vorgegebenen Funktion folgt, die in Abhängigkeit der Last darstellbar ist, wobei die Abgas-Rückführungsrate nicht volumetrisch, sondern in Abhängigkeit der $CO_2$-Emission definiert wird. Die Abgas-Rückführungsrate berechnet sich in diesem Fall aus dem Verhältnis des Kohlendioxid-Anteils im Ansaugtrakt zum Kohlendioxid-Anteil im Abgasstrang. Die Kraftstoffeinspritzung in die Spenderzylinder wird in der Weise geregelt durchgeführt, daß die Abgas-Rückführungsrate dem lastabhängigen, vorgegebenen Verlauf folgt.

Als Verlauf für die Abgas-Rückführungsrate wird eine Funktion vorgegeben, welche im Leerlauf ein erstes Minimum einnimmt, im Teillastbetrieb auf ein Maximum ansteigt und im Vollastbetrieb auf ein zweites Minimum absinkt, wobei das Vollast-Minimum zweckmäßig niedriger ist als das Leerlauf-Minimum. Dementsprechend wird sowohl im Leerlauf als auch im Vollastbetrieb kein oder verhältnismäßig wenig Abgas in den Ansaugtrakt zurückgeführt, im Teillastbereich hingegen eine verhältnismäßig hohe Abgasmenge in den Ansaugtrakt wieder eingespeist. Zweckmäßig handelt es sich bei der vorzugebenden Abgas-Rückführungsrate um eine stetige Funktion, insbesondere um eine bis in die erste Ableitung stetige Funktion.

Im Leerlauf empfiehlt es sich, die Abgas-Rückführungsrate entsprechend dem Verhältnis der Zahl der Spenderzylinder zur Gesamtzahl aller Zylinder einzustellen, was gleichbedeutend ist mit einer identischen Kraftstoffeinspritzung für die Spenderzylinder und für die übrigen Zylinder. Dadurch wird im Leerlaufbetrieb bzw. im Nullastbetrieb eine gleichmäßige Schwingungsverteilung und eine gute Laufruhe erreicht.

Unter Vollast wird die Abgas-Rückführungsrate auf den halben Wert des Verhältnisses der Zahl der Spenderzylinder zur Gesamtzahl aller Zylinder eingestellt, indem die Einspritzmenge für die Spenderzylinder auf die Hälfte der Einspritzmenge der übrigen Zylinder reduziert wird. Die Reduzierung der Abgas-Rückführungsrate unter Vollast verbessert das Emissionsverhalten und erhöht die Motorleistung, wobei eventuelle Lauf-Ungleichförmigkeiten aufgrund der ungleichen Kraftstoffeinspritzung in die Spenderzylinder und die übrigen Zylinder wegen des im Vollastbereich erhöhten Schwingungsniveaus vernachlässigbar sind, da sie subjektiv nicht oder nur geringfügig wahrnehmbar sind.

Weitere Vorteile und zweckmäßige Ausführungsformen sind den weiteren Ansprüchen, der Figurenbeschreibung und den Zeichnungen zu entnehmen. Es zeigen:

Fig. 1 eine schematische Ansicht einer Sechs-Zylinder-Brennkraftmaschine mit einem einzelnen Spenderzylinder für die Abgasrückführung,

Fig. 2 ein Diagramm mit mehreren Linien mit unterschiedlichen Abgas-Rückführungsraten in Abhängigkeit der Drehzahl und des Ladedruckes.

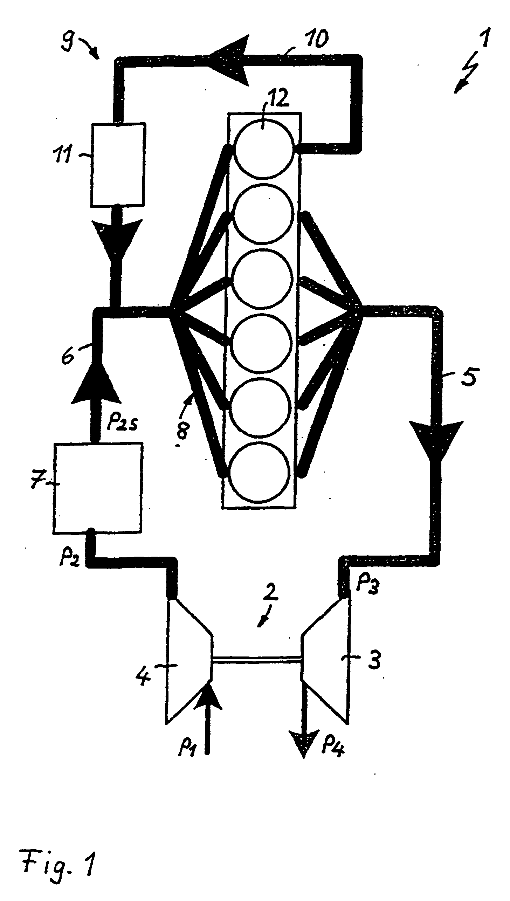

Die in Fig. 1 dargestellte Brennkraftmaschine 1 weist einen Abgasturbolader 2 mit einer Turbine 3 im Abgasstrang 5 und einen Verdichter 4 im Ansaugtrakt 6 auf. Die unter dem Abgasgegendruck $p_3$ stehenden Abgase im Abgasstrang 5 treiben die Turbine 3 an und werden mit dem entspannten Druck $p_4$ nach einer katalytischen Reinigung in die Atmosphäre entlassen. Die Turbine 3 treibt den Verdichter 4 an, der die mit Atmosphärendruck $p_1$ angesaugte Frischluft auf einen erhöhten Druck $p_2$ verdichtet. Die verdichtete Luft wird in einem im Ansaugtrakt 6 angeordneten Ladeluftkühler gekühlt und anschließend mit dem Ladedruck $p_{2S}$ den Zylindereinlässen 8 der Brennkraftmaschine zugeführt.

Die Brennkraftmaschine 1 ist mit einer Abgasrückführung 9 versehen, über die ein Teil des in der Brennkraftmaschine 1 im Verbrennungsbetrieb entstehenden Abgases in den Ansaugtrakt 6 eingespeist und mit der Frischluft im Ansaugtrakt vermengt wird. Die Abgasrückführung 9 umfaßt eine AbgasRückführungsleitung 10, welche am Zylinderauslaß abzweigt und in den Ansaugtrakt stromab des Verdichters 4 und stromab des Ladeluftkühlers 7 einmündet, sowie einen Abgas-Rückführungskühler 11, welcher in der AbgasRückführungsleitung 10 zur Kühlung der rückgeführten Abgase angeordnet ist.

Über die Abgasrückführung 9 sind nur die Abgase eines einzelnen Zylinders 12 der Brennkraftmaschine in den Ansaugtrakt 6 zurückzuführen. Hierfür ist die AbgasRückführungsleitung 10 mit dem Zylinderauslaß des Zylinders 12, welcher die Funktion eines Abgas-Spenderzylinders hat, verbunden, so daß sämtliche Abgase des Spenderzylinders 12 in allen Betriebspunkten der Brennkraftmaschine rückgeführt werden. Dagegen nehmen die Abgase der übrigen Zylinder der Brennkraftmaschine nicht an der Abgasrückführung teil, sondern werden über den Abgasstrang 5 und die im Abgasstrang 5 angeordnete Turbine 3 in die Atmosphäre abgeleitet. Die auf Volumenbasis ermittelte Abgas-Rückführungsrate bleibt im Standardfall gleicher Einspritzmengen in alle Zylinder über alle Betriebspunkte der Brennkraftmaschine konstant und entspricht dem Zahlenverhältnis von Spenderzylindern zur Gesamtzahl aller Zylinder der Brennkraftmaschine - im Ausführungsbeispiel ein Sechstel -.

Zur Beschreibung des Verbrennungsverhaltens der Brennkraftmaschine und der Erzeugung von Emissionen wird eine Abgas-Rückführungsrate AGR auf der Basis von $CO_2$-Emissionen gemäß der Beziehung

$$AGR = CO_{2,Ansaug} / CO_{2,Abgas}$$

entsprechend dem Verhältnis des Kohlendioxid-Anteils $CO_{2,Ansaug}$ im Ansaugtrakt zum Kohlendioxid-Anteil $CO_{2,Abgas}$ im Abgasstrang definiert. Diese $CO_2$-Abgas-Rückführungsrate kann unabhängig von der volumetrischen Abgas-Rückführungsrate über die Kraftstoffeinspritzung in den Spenderzylinder manipuliert werden, indem die dem Spenderzylinder 12 zugeführte Kraftstoffmenge in unterschiedlichem Maße im Verhältnis zu den den übrigen Zylindern zugeführten Kraftstoffmengen erhöht oder verringert wird, wobei eine Erhöhung der Einspritzmenge die Abgas-Rückführungsrate AGR insbesondere proportional steigert und eine Verringerung der Einspritzmenge die Abgas-Rückführungsrate AGR insbesondere proportional vermindert. Über die Steuerung der Einspritzmenge ist es möglich, eine gewünschte Abgas-Rückführungsrate für jeden Betriebspunkt der Brennkraftmaschine, insbesondere für jeden Lastfall, einzustellen.

Die Regelung bzw. Steuerung der eingespritzten Kraftstoffmenge wird von einer Regel- und Steuereinheit der Brennkraftmaschine in Abhängigkeit von aktuellen Zustands- und Betriebsgrößen der Brennkraftmaschine gemäß hinterlegten Kennfeldern durchgeführt.

Die gezielte Beeinflussung der Einspritzung im Spenderzylinder hat den Vorteil, daß eine variable Abgas-Rückführungsrate einstellbar ist. Zugleich kann der Turbolader in der Weise ausgelegt werden, daß sich ein positives Spülgefälle mit einem den Abgasgegendruck $p_3$ übersteigenden Ladedruck $p_{2S}$ einstellt. Die Steuerung der Einspritzmenge in den Spenderzylinder kann kennfeldgesteuert vorgenommen werden und ist mit hoher Präzision durchführbar. Es reicht aus, den Kohlendioxid-Anteil sensorisch z bestimmen; darüberhinaus sind keine weiteren Sensorsignale erforderlich.

Die Kraftstoffeinspritzung wird in der Weise vorgenommen, daß die Abgas-Rückführungsrate einer vorgegebenen, lastabhängigen Funktion entspricht. Für ein im Hinblick auf Verbrauch, Komfort und Abgasemission optimiertes Verhalten der Brennkraftmaschine ist vorgesehen, daß die Soll-Abgas-Rückführungsrate im Leerlauf ein Minimum einnimmt, mit steigender Last im Teillastbetrieb auf ein Maximum ansteigt und schließlich im Vollastbetrieb wieder auf ein Minimum absinkt, welches sich von dem Leerlaufminimum unterscheiden kann.

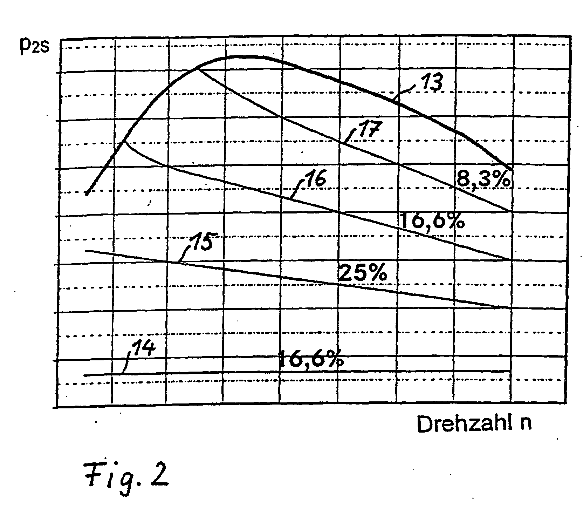

In dem Diagramm gemäß Fig. 2 sind verschiedene Drucklinien für den Ladedruck $p_{2S}$ in Abhängigkeit der Motordrehzahl n dargestellt, welche sich bis zu einer Grenzkurve 13 erstrecken, die den Verlauf des maximal zulässigen, lastabhängigen Ladedruckes darstellt, welcher ohne die Gefahr von Bauteilschädigungen realisiert werden kann. Unterhalb der Grenzkurve 13 sind vier verschiedene Kurvenverläufe 14, 15, 16, 17 dargestellt, die jeweils einen unterschiedlich hohen Ladedruck $p_{2S}$ darstellen, wobei mit zunehmenden Ladedruck $p_{2S}$ die Last ansteigt. Jedem Kurvenverlauf ist jeweils eine Abgas-Rückführungsrate AGR des Spenderzylinders zugeordnet. Der niedrigste Kurvenverlauf 14 stellt die Situation im Leerlauf bzw. im Nullastbetrieb dar, in welchem ein konstanter, niedriger Ladedruck $p_{2S}$ herrscht. In diesem Betriebspunkt beträgt die Abgas-Rückführungsrate AGR im gezeigten Ausführungsbeispiel eines Sechs-Zylinder-Motors genau 16 2/3%, was dem Verhältnis der Anzahl der Spenderzylinder zur Gesamtanzahl aller Zylinder entspricht. Dieses Verhältnis wird für den Fall erreicht, daß die dem Spenderzylinder zugeführte Kraftstoffmenge exakt gleich groß ist wie die den übrigen Zylindern jeweils zugeführte Kraftstoffmenge. Dadurch wird im Leerlaufbetrieb bzw. im Nullastbetrieb eine dynamische Schwingungsunwucht vermieden, die Laufruhe ist verbessert.

Der nächst höhere Kurvenverlauf 15 stellt die Situation im unteren Teillastbereich dar, in welchem eine höhere Abgas-Rückführungsrate AGR gewünscht ist. Die Abgas-Rückführungsrate AGR steigt in diesem Bereich auf ein Maximum an, das im Ausführungsbeispiel bei 25% liegt und somit um die Hälfte höher ist als im Leerlauf. Mit weiter zunehmender Last sinkt die Abgas-Rückführungsrate AGR gemäß den Kurvenverläufen 16, 17 wieder ab und nimmt im Vollastbereich, der durch den Kurvenverlauf 17 repräsentiert wird, ein absolutes Minimum ein, das im Ausführungsbeispiel mit 8,3% beim halben Wert der Abgas-Rückführungsrate des Leerlaufes liegt.

Die Steuerung bzw. Regelung der Abgas-Rückführungsrate erfolgt bevorzugt durch Einstellung des Zeitpunktes und der Zeitdauer der Kraftstoffeinspritzung. Es kann aber gegebenenfalls zweckmäßig sein, die Abgas-Rückführungsrate auch durch Manipulation des Zündzeitpunktes zu beeinflussen.

Das dargestellte Verfahren bzw. die Vorrichtung eignet sich vorteilhaft zur Anwendung in mehrzylindrigen Dieselmotoren, kann darüberhinaus aber auch in Ottomotoren realisiert werden.

## Patentansprüche

1. Verfahren zur Einstellung einer aufgeladenen Brennkraftmaschine mit Abgasrückführung, mit einer Abgasrückführungs-Einrichtung (9) zur Rückführung von Abgas aus dem Abgasstrang (5) stromauf einer Turbine (3) in den Ansaugtrakt (6) stromab eines Verdichters (4), wobei die in die Brennräume der Brennkraftmaschine (1) eingespritzte Kraftstoffmenge lastabhängig eingestellt werden kann und das Abgas nur eines Teils der Zylinder, welche die Funktion von Abgas-Spenderzylindern (12) einnehmen, rückgeführt wird, wobei die Kraftstoffeinspritzung in die Brennräume der Abgas-Spenderzylinder (12) unabhängig von den übrigen Zylindern eingestellt wird, wobei die in die Spenderzylinder (12) eingespritzte Kraftstoffmenge zur Erhöhung der Abgas-Rückführungsrate (AGR) im Vergleich zu den den übrigen Zylindern zugeführten Kraftstoffmengen erhöht und zur Absenkung der Abgas-Rückführungsrate (AGR) im Vergleich zu den den übrigen Zylindern zugeführten Kraftstoffmengen reduziert wird, **dadurch gekennzeichnet, dass** die Abgas-Rückführungsrate (AGR) im Leerlauf ein Minimum, im Teillastbetrieb ein Maximum und im Vollastbetrieb ein Minimum einnimmt, und dass die Abgas-Rückführungsrate (AGR) unter Volllast auf den halben Wert des Verhältnisses der Zahl der Abgas-Spenderzylinder zur Gesamtzahl aller Zylinder der Brennkraftmaschine eingestellt wird.

2. Verfahren nach Anspruch 1, **dadurch gekennzeichnet, dass** die Abgas-Rückführungsrate (AGR) im Leerlauf entsprechend der Zahl der Abgas-Spenderzylinder (12) zur Gesamtzahl aller Zylinder der Brennkraftmaschine eingestellt wird.

3. Verfahren nach Anspruch 1 oder 2, **dadurch gekennzeichnet, dass** nur das Abgas eines einzigen Zylinders (12) der Brennkraftmaschine rückgeführt wird.

## Claims

1. A process for adjusting a supercharged internal combustion engine with exhaust gas recirculation having an exhaust gas recirculation device (9) for recirculating exhaust gas from the exhaust train (5) upstream of a turbine (3) into the intake train (6) downstream of a compressor (4), it being possible to adjust the fuel volume injected into the combustion chambers of the internal combustion engine (1) dependent on load and the exhaust gas of only some of the cylinders performing the function of exhaust gas dispensing cylinders (12) being recycled, the fuel injection into the combustion chambers of the exhaust gas dispensing cylinders (12) being adjusted independently of the other cylinders, the fuel volume injected into the dispensing cylinders (12) being increased in order to increase the exhaust gas recirculation rate (AGR) in comparison to the fuel volumes fed to the other cylinders and being reduced in order to reduce the exhaust gas recirculation rate (AGR) in comparison to the fuel volumes being fed to the other cylinders, **characterised in that** the exhaust gas recirculation rate (AGR) is a minimum value at engine idle, a maximum value at part load and a minimum value at full load, and at full load the exhaust gas recirculation rate (AGR) is set to half the value of the ratio between the number of exhaust gas dispensing cylinders and the total number of all the cylinders in the internal combustion engine.

2. A process in accordance with claim 1, **characterised in that** at engine idle the exhaust gas recirculation rate (AGR) is adjusted in accordance with the ratio between the number of exhaust gas dispensing cylinders (12) and the total number of all the cylinders in the internal combustion engine.

3. A process in accordance with claim 1 or 2, **characterised in that** only the exhaust gas from one single cylinder (12) in the internal combustion engine is recirculated.

## Revendications

1. Procédé pour régler un moteur à combustion interne suralimenté, avec renvoi des gaz d'échappement, comportant un dispositif (9) de renvoi des gaz d'échappement pour envoyer les gaz d'échappement depuis le conduit d'échappement (5) en amont d'une turbine (3) dans le conduit d'aspiration (6) en aval d'un compresseur (4), selon lequel la quantité de carburant injectée dans les chambres de combustion du moteur à combustion interne (1) peut être réglée en fonction de la charge et les gaz d'échappement provenant seulement d'une partie des cylindres, qui assument la fonction de cylindres (12) de distribution des gaz d'échappement, sont renvoyés, l'injection de carburant dans les chambres de combustion des cylindres (12) de distribution des gaz d'échappement est réglée indépendamment des autres cylindres, la quantité de carburant injectée dans les cylindres de distribution (12) est accrue pour augmenter le taux de renvoi des gaz d'échappement (AGR) par rapport aux quantités de carburant envoyées aux autres cylindres et est réduite pour réduire le taux de renvoi (AGR) des gaz d'échappement par rapport aux quantités de carburant envoyées aux autres cylindres,, **caractérisé en ce que**

le taux (AGR) des gaz d'échappement est réglé sur une valeur minimale lors du ralenti, sur une valeur maximale lors du fonctionnement sous charge partielle et sur une valeur minimale lors du fonctionnement à pleine charge, et que le taux (AGR) de renvoi des gaz d'échappement à pleine charge est réglé sur la moitié de la valeur du rapport du nombre des cylindres de distribution des gaz d'échappement au nombre total de tous les cylindres du moteur à combustion interne.

2. Procédé selon la revendication 1, **caractérisé en ce que** le taux (AGR) de renvoi des gaz d'échappement au ralenti est réglé conformément au nombre des cylindres (12) de distribution des gaz d'échappement rapporté au nombre total de tous les cylindres du moteur à combustion interne.

3. Procédé selon la revendication 1 ou 2, **caractérisé en ce que** seuls les gaz d'échappement d'un seul cylindre (12) du moteur à combustion interne sont renvoyés.

Fig. 1

Fig. 2